# EUROPEAN PATENT APPLICATION

(11) **EP 0 564 242 A1**
(43) Date of publication of application: **06.10.1993**
(21) Application number: 93302480.4
(22) Date of filing: 30.03.1993
(51) Int. Cl.: C08L 69/00

(54) **PC/ABS blends exhibiting reduced gloss**

(30) Priority: 03.04.1992 US 863572
(71) Applicant: GENERAL ELECTRIC COMPANY, Schenectady, NY 12345 (US)
(72) Inventor: Kuruganti, Vijaya Kumar, Parkersburg, West Virginia 26101 (US); Vilasagar, Shripathy, Parkersburg, West Virginia 26101 (US); Cox, Keith Edward, Mineral Wells, West Virginia 26150 (US); Kidder, Kevin Reed, Parkersburg, West Virginia 26101 (US)
(74) Representative: Pratt, Richard Wilson

(57) **Abstract**

Polymer blends are provided which exhibit reduced surface gloss while maintaining impact and flow properties. The blends comprise an aromatic polycarbonate resin, an acrylonitrile-butadiene-styrene graft copolymer and an olefin-carboxylic acid copolymer. The blends are useful as molding resins for making molded plastic parts exhibiting reduced surface gloss.

## Description

The present invention relates to polymeric blends exhibiting reduced gloss, and more particularly relates to blends comprising an aromatic polycarbonate, and ABS graft copolymer and an olefin-carboxylic acid copolymer.

### Description of the related Art

Blends of polycarbonate resin and ABS resin are known, see for example, German Patent 1,170,141. Polycarbonate resin/ABS resin blends however exhibit high levels of gloss while in various applications it is desired that the blends exhibit low surface gloss. Thermoplastic molding compositions having a low gloss surface finish comprising a polymer blend of a polycarbonate and an emulsion graft AS polymer, and a low gloss enhancing amount of a poly(epoxide) are known, see Jalbert et al, US 5026777, which is incorporated herein by reference. While surface gloss reduction in PC/ABS blends can be achieved by the addition of polyepoxides, certain additives can, such as titanium dioxide and/or phosphite antioxidants, interfere with the gloss reducing abilities of the polyepoxides.

### Summary of the Invention

The present invention involves blends of aromatic polycarbonate resin with acrylonitrile-styrene-butadiene graft copolymers wherein a gloss reducing amount of an olefin-carboxylic acid copolymer is included in the blend. The use of olefin-carboxylic acid copolymer in the blend reduces the gloss of articles molded from the blends without substantially increasing the viscosity of the blends and can reduce the gloss even in the presence of certain additives which interfere with polyepoxide gloss reducing agents.

### Detailed Description of the Invention

The thermoplastic molding compositions of the invention comprise a polymer blend of a polycarbonate, an ABS graft copolymer and a gloss reducing amount of an olefin-carboxylic acid copolymer.

The ABS component which is included in the present compositions comprises ABS type polymers, the molecules of which contain two or more polymeric parts of different composition, namely a rubber substrate and a graft part, that are bonded chemically. The ABS polymer is preferably prepared by polymerizing a conjugated diene, such as butadiene, or a conjugated diene with a monomer copolymerizable therewith, such as styrene, to provide a rubber substrate. After formation of the substrate, at least one grafting monomer, and preferably two, are polymerized in the presence of the prepolymerized substrate to obtain the graft polymer. The ABS resins are preferably prepared by emulsion grafting methods well known in the art.

The specific conjugated diene monomers normally utilized in preparing the rubber substrate of the graft polymer are generically described by the following formula: 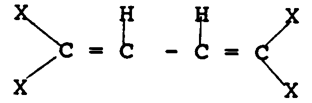
wherein X is selected from the group consisting of hydrogen, alkyl groups containing from one to five carbon atoms, chlorine or bromine. Examples of dienes that may be used are butadiene, isoprene, 1,3-heptadiene, methyl-1,3-pentadiene, 2,3-dimethylbutadiene, 2-ethyl-1,3-pentadiene 1,3- and 2,4-hexadienes, chloro and bromo substituted butadienes such as dichlorobutadiene, bromobutadiene, dibromobutadiene, mixtures thereof, and the like. A preferred conjugated diene is butadiene.

Optionally, the rubber substrate may be an acrylate rubber, such as one based on n-butyl acrylate, ethylacrylate, 2-ethylhexylacrylate, and the like. Additionally, minor amounts of a diene may be copolymerized in the acrylate rubber substrate to yield improved grafting with the matrix polymer. These resins are well known in the art and many are commercially available.

The substrate polymer, as mentioned, is preferably a conjugated diene polymer such as polybutadiene, polyisoprene, or a copolymer, such as butadiene-styrene, butadiene-acrylonitrile, or the like.

One monomer or group of monomers that may be polymerized in the presence of the prepolymerized substrate to form the graft portion of the ABS resin include monovinylaromatic compounds. The monovinylaromatic monomers utilized are generically described by the following formula: 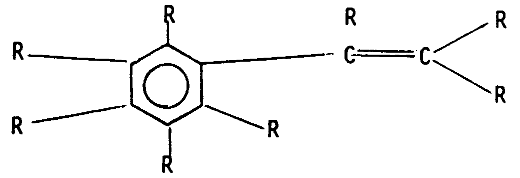
wherein R is selected from the group consisting of hydrogen, alkyl groups of 1 to 5 carbon atoms, cycloalkyl, aryl, alkaryl, aralkyl, alkoxy, aryloxy, and halogens. Examples of substituted vinylaromatic compounds include styrene, 4-methylstyrene, 3,5-diethylstyrene, 4-n-propylstyrene, α-methylstyrene, α-methyl vinyltoluene, α-chlorostyrene, α-bromostyrene, dichlorostyrene, dibromostyrene, tetra-chlorostyrene, mixtures thereof and the like. The preferred monovinylaromatic monomers used are styrene and/or α-methylstyrene.

A second group of monomers that may be polymerized in the presence of the prepolymerized substrate to form the graft portion of the ABS resin include acrylic monomers such as acrylonitrile, substituted acrylonitrile, and/or acrylic acid esters, for example alkyl acrylates such as methyl methacrylate.

The acrylonitrile, substituted acrylonitrile, or acrylic acid esters are described generically by the following formula: 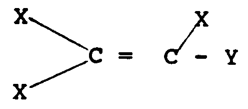
wherein X is as previously defined and Y is selected from the group consisting of cyano and carbalkoxy groups wherein the alkoxy group of the carbalkoxy contains from one to about twelve carbon atoms. Examples of such monomers include acrylonitrile, ethacrylonitrile, methacrylonitrile, α-chloroacrylonitrile, β-chloroacrylonitrile, α-bromoacrylonitrile, β-bromoacrylonitrile, methyl acrylate, methyl methacrylate, ethyl acrylate, butyl acrylate, propylacrylate, isopropyl acrylate and mixtures thereof. The preferred acrylic monomer is acrylonitrile and the preferred acrylic acid esters are ethyl acrylate and methyl methacrylate. It is also preferred that the acrylic acid esters, when included, are employed in combination with styrene or acrylonitrile.

In the preparation of the graft copolymer, the rubber substrate conjugated diolefin polymer or copolymer exemplified by a 1,3-butadiene polymer or copolymer preferably present at a level of from 15 to 90 percent by weight, and more preferably at from 30 to 70 percent by weight, and most preferably about 50 percent by weight, of the total ABS graft polymer. The monomers polymerized in the presence of the substrate to form the grafted portion, exemplified by styrene and acrylonitrile, preferably are together present at a combined level of from about 10 to about 85 percent by weight of the total ABS graft polymer, more preferably 30 to 70 weight percent thereof and most preferably about 50 weight percent thereof. It is additionally preferred that the second group of grafting monomers, exemplified by acrylonitrile, ethyl acrylate and methyl methacrylate, comprise from about 10 percent to about 40 percent by weight of the grafted portion of the ABS resin while the monovinylaromatic hydrocarbon monomers, exemplified by styrene, comprise from about 60 to about 90 per cent by weight of the grafted portion of the ABS resin.

In preparing the polymer, it is normal to have a certain percentage of the polymerizing monomers combine with each other and occur as non-grafted rigid copolymer. If styrene is utilized as one grafting monomer and acrylonitrile is the second grafting monomer, a certain portion of the composition will copolymerize as free styrene-acrylonitrile copolymer. Similarly, in the case where α-methylstyrene (or another monomer) is substituted for the styrene in the composition used in preparing the graft polymer, a certain percentage of the composition may be an α-methylstyrene-acrylonitrile copolymer.

Also, there are occasions where a rigid polymer or copolymer, such as α-methylstyrene-acrylonitrile copolymer may be added to the graft ABS polymer by mechanical blending. The rigid polymers and copolymers which may be so added may be based on one or more of the following:
monovinylaromatic compounds, methacrylic acid esters of C₁-C₄ aliphatic alcohols, acrylonitrile, substituted acrylonitrile and imidized maleic anhydride derivatives which are unsubstituted or substituted with an alkyl or aryl group. Examples of these rigid copolymers which may be added to the ABS graft polymer include polymethylmethacrylate (PMMA), copolymers of methyl methacrylate with one or more of the C₁-C₄ acrylates, styrene, α-methylstyrene and/or acrylonitrile, and the like. Such rigid copolymers may be prepared by emulsion, bulk, suspension, bulk-suspension or solution polymerization methods which are well known in the art.

In a preferred embodiment of the invention, the diene rubber backbone is present at a level of at least 50 weight percent based on the total weight of the ABS graft copolymer. The present composition preferably also contains an amount of styrene-acrylonitrile copolymer formed in a separate reaction.

The present compositions also contain a polycarbonate component. Polycarbonates are a special class of polyesters derived from the reaction of carbonic acid derivatives with aromatic, aliphatic, or mixed diols. They may be produced by the reaction of phosgene with a diol in the presence of an appropriate hydrogen chloride receptor or by a melt transesterification reaction between the diol and a carbonate ester. Polycarbonate can be made from a wide variety of starting materials, however, the principal polycarbonate produced commercially and preferred herein is bisphenol A polycarbonate, a polycarbonate made by reacting bisphenol A with phosgene by condensation. Also preferred are blends of bisphenol A polycarbonate with homopolymers and/or copolymers of brominated bisphenol A polycarbonate.

For a more complete discussion of the chemistry of polycarbonates, one may refer to Kirk-Othmer encyclopedia of Chemical Technology, Third edition(1982) Vol. 18, pp.479-494. This article, by D. W. Fox, is incorporated by reference in its entirety.

The present compositions also include an olefin-carboxylic acid copolymer component which preferably comprises an ethylene-methacrylic acid copolymer which is commercially available and sold by DuPont under the trademark Nurcrel^{R}. The olefin-carboxylic acid copolymers comprise a polymer of an α-olefin having the general formula R¹CH=CH₂ where R¹ is a radical selected from the class consisting of hydrogen and alkyl radicals having from 1 to 8 carbon atoms, the olefin content of said copolymer being at least 50 mol percent based on the polymer, and an α,β-ethylenically unsaturated carboxylic acid having 1 or 2 carboxylic acid groups, the acid monomer content of said copolymer being from 0.2 to 25 mol percent based on the copolymer, said carboxylic acid being uniformly distributed throughout the copolymer.

The α-olefin carboxylic acid copolymers employed in the present invention are copolymers of α-olefins with ethylenically unsaturated acids. As indicated, the α-olefins employed in the copolymer are α-olefins which have the general formula R¹CH=CH₂ where R¹ is either a hydrogen or an alkyl group having preferably from 1 to 8 carbon atoms. Thus, suitable olefins include ethylene, propylene, butene-1, pentene-1, hexene-1, heptene-1, 3-methylbutene-1,4-methylpentene-1, etc. Although polymers of olefins having higher carbon numbers can be employed in the present invention, they are not materials which are readily obtained or available. The concentration of the α-olefin is preferably at least 50 mol percent in the copolymer, and is more preferably greater than 80 mol percent.

The second essential component of the olefin-carboxylic acid copolymer comprises an α,β-ethylenically unsaturated carboxylic acid group containing monomer having preferably from into 8 carbon atoms. Examples of such monomers are acrylic acid, methacrylic acid, ethacrylic acid, itaconic acid, maleic acid, fumaric acid, monoesters of said dicarboxylic acids, such as methyl hydrogen maleate, methyl hydrogen fumarate, ethyl hydrogen fumarate and maleic anhydride. Although maleic anhydride is not a carboxylic acid in that it has no hydrogen attached to the carboxyl groups, it can be considered an acid for the purposes of the present invention because of its chemical reactivity being that of an acid. Similarly, other α,β-monoethylenically unsaturated anhydrides of carboxylic acids can be employed. As indicated, the concentration of acidic monomer in the copolymer is from 0.2 mol percent to 25 mol percent, and preferably, from 1 to 10 mol percent.

The olefin carboxylic acid copolymers employed in forming the compositions of the present invention may be prepared in several ways. Thus, the olefin-carboxylic acid copolymers may be obtained by the copolymerization of a mixture of the olefin and the carboxylic acid monomer. This method is preferred for the copolymers of ethylene employed in the present invention. Methods employed for the preparation of ethylene carboxylic acid copolymers have been described in the literature. However, as pointed out further hereinafter, the preferred products are those obtained from base copolymers in which the carboxylic acid groups are randomly distributed over all of the copolymer molecules. In brief, that technique required carrying out the copolymerization of the α-olefin and the carboxylic acid monomers in a single phase environment, i.e. one in which the monomers are soluble, e.g. benzene or ethylene, which may be in liquid or vaporized form. Preferably, and especially when relatively small amounts of the carboxylic acid component are desired in the base copolymer, the process is continuous, the monomers being fed to the reactor in the ratio of their relative polymer-forming reactivities and the residence time in the reactor being limited so that from about 3-20% of the ethylene-monomer feed is converted to polymer. In a preferred process, a mixture of the two monomers is introduced into a polymerization environment maintained at high pressures, 50 to 3000 atmospheres, and elevated temperatures, 150 to 300·C., together with a free radical polymerization initiator such as a peroxide.

Copolymers of α-olefins with carboxylic acids may also be prepared by copolymerization of the olefin with an α,-ethylenically unsaturated carboxylic acid derivative which subsequently or during copolymerization is reacted either completely or in part to form the free acid. Thus, hydrolysis, saponification or pyrolysis may be employed to form an acid copolymer from an ester copolymer. It is preferable to employ a copolymer containing the carboxylic acid groups randomly distributed over all molecules. Such random distribution is best obtained by direct copolymerization. Olefin-carboxylic acid graft copolymers which contain a third non-reactive monomer are, of course, satisfactory.

The olefin-carboxylic acid copolymers employed are preferably of high molecular weight. The molecular weight of the copolymers useful as base resins is most suitably defined by melt index, a measure of viscosity, described in detail in ASTM-D-1238-57T. The melt index of copolymers employed in the formation of compositions is preferably in the range of 0.1 to 1000 g./10 min., and, more particularly, in the range of 1.0 to 100 g./10 min. The olefin-carboxylic acid copolymer need not necessarily comprise a two component polymer. Thus, although the olefin content of the copolymer should be at least 50 mol percent, more than one olefin can be employed to provide the hydrocarbon nature of the copolymer base. Additionally, other copolymerizable monoethylenically unsaturated monomers, illustrative members of which are mentioned below in this paragraph, can be employed in combination with the olefin and the carboxylic acid comonomer. The scope of olefin-carboxylic acid copolymers suitable for use in the present invention is illustrated by the following examples: Ethylene/acrylic acid copolymers, ethylene/methacrylic acid copolymers, ethylene/itaconic acid copolymers, ethylene/methyl hydrogen maleate copolymers, ethylene/maleic acid copolymers, ethylene/acrylic acid/methyl methacrylate copolymers, ethylene/methacrylic acid/ethyl acrylate copolymers, ethylene/itaconic acid/methyl methacrylate copolymers, ethylene/methyl hydrogen maleate/ethyl acrylate copolymers, ethylene/methacrylic acid/vinyl acetate copolymers, ethylene/acrylic acid/vinyl alcohol copolymers, ethylene/propylene/acrylic acid copolymers, ethylene/styrene/acrylic acid copolymers, ethylene/methacrylic acid/acrylonitrile copolymers, ethylene/furmaic acid/vinyl methyl ether copolymers, ethylene/vinyl chloride/acrylic acid copolymers, ethylene/vinylidene chloride/acrylic acid copolymers, ethylene/vinyl fluoride/methacrylic acid copolymers, and ethylene/chlorotrifluoroethylene/methacrylic acid copolymers.

The olefin-carboxylic acid copolymers used in the composition of the present invention are free of metal ions, containing essentially no metal ions, for example, consisting of olefin and carboxylic acid units.

The compositions of the present invention preferably comprise polycarbonate resin at a level of from 30 to 90 weight percent based on the total weight of the composition, more preferably from 50 to 80 weight percent thereof, even more preferably from 60 to 80 weight percent thereof, and most preferably about 60 to 70 weight percent thereof. The compositions preferably comprise a non-grafted rigid copolymer, such as styrene-acrylonitrile copolymer, at a level of from 0 to 60 weight percent based on the total weight of the composition, more preferably from 5 to 30 weight percent thereof, and most preferably 15 to 25 weight percent thereof. The compositions preferably comprise a rubber containing graft copolymer, such as an ABS graft copolymer, at a level of from 3 to 30 weight percent based on the total weight of the graft copolymer, more preferably from 5 to 25 weight percent thereof, and most preferably from 10 to 20 weight percent thereof. The compositions may also contain additional ingredients such as hindered phenolic antioxidants, organic phosphite antioxidants, lubricants, mold release agents, flame retardants and colorants and/or pigments including titanium dioxide.

The olefin-carboxylic acid polymer is preferably present in a gloss reducing amount selected from between 1 and 20 weight percent based on the total weight of the composition, more preferably from 1 to 10 weight percent thereof, and most preferably from 3 to 8 weight percent thereof. The preferred olefin-carboxylic acid copolymer is a copolymer of ethylene-methacrylic acid.

### EXAMPLES:

The following examples illustrate the advantage of using olefin-carboxylic acid copolymers as gloss reducing agents when compared to polyepoxide gloss reducing agents in polycarbonate/ABS blends. Examples A-B are comparative examples. Examples 1 to 5 are examples comprising polycarbonate, graft polymer and olefin-carboxylic acid copolymer.

The olefin-carboxylic acid used in this study were obtained commercially from Du Pont, and are ethylene-methacrylic acid copolymers. The experimental blends containing PC, SAN, ABS and various olefin-carboxylic acid copolymers (Nucrel^{R} copolymers). The ingredients were melt compounded in a twin screw extruder at a stock temperature of 500°F and 300 RPM. Injection molding of the test samples (tensile bars, circular plaques) was done at 525°Fo Table-I lists the formulations and properties of the experimental blends and control blends.

**TABLE I**

| | 1 | 2 | 3 | 4 | 5 | A | B |
|---|---|---|---|---|---|---|---|
| Polycarbonate | 64 | 64 | 64 | 64 | 64 | 64 | 64 |
| SAN 1 | 20 | 20 | 20 | 20 | 20 | 20 | 20 |
| HRG 1 | 16 | 16 | 16 | 16 | 16 | 16 | 16 |
| AO | 0.1 | 0.1 | 0.1 | 0.1 | 0.1 | 0.1 | 0.1 |
| Nucrel® 410 | 5.0 | - | - | - | - | - | - |
| Nucrel® 535 | - | 5.0 | - | - | - | - | - |
| Nucrel® 010 | - | - | 5.0 | - | - | - | - |
| Nucrel® 403 | - | - | - | 5.0 | - | - | - |
| Nucrel® 035 | - | - | - | - | 5.0 | - | - |
| Diepoxide | - | - | - | - | - | 0.1 | - |
| Hunter Gloss 60° | 32 | 42 | 35 | 16 | 46 | 41 | 85 |
| Notched (1/8'') Izod, 73°F (ft-lb/in) | 26 | 18 | 26 | 18 | 30 | 19 | 29 |
| Melt Visc. 550°F Shear Rate 1000 S-1 | 2140 | 1790 | 1780 | 1990 | 1750 | 1910 | 1730 |

Nucrel® is registered trademark of Du Pont for olefin-carboxylic acid copolymers.
Nucrel® 410: Ethylene-Methylmethacrylic acid copolymer. Melt flow (ASTM D-1238) 10 dg/10 minute.
Nucrel® 535: Ethylene-Methacrylic acid copolymer. Melt flow (ASTM D-1238) 35 dg/10 minute.
Nucrel® 010: Ethylene-Methacrylic acid copolymer.
Melt flow (ASTM D-1238) 11 dg/10 minute.
Nucrel® 403: Ethylene-Methacrylic acid copolymer.
Melt flow (ASTM D-1238) 3.0 dg/minute.
Nucrel® 035: Ethylene-Methacrylic acid copolymer.
Melt flow (ASTM D-1238) 35 dg/minute.

The polycarbonate is a bisphenol A polycarbonate.

SAN 1 is a 75:25 weight ratio styrene to acrylonitrile copolymer weight averages molecular weight 115000.

HRG 1 is an ABS graft copolymer having 50 weight percent polybutadiene rubber, and 50 weight percent styrene-acrylonitrile polymer as the graft part where the ratio of styrene to acrylonitrile is 72:28.

From **TABLE-I** it is evident that the blends containing Nucrel^{R} copolymers (1 through 5) have significantly lower gloss compared to comparative Example B, and have comparable or better impact and flow properties.

*AO, is supplied by B.F. Goodrich as Goodrite 3114 and has the chemical structure 1,3,5-Tris(3,5-di-t-butyl-4-hydroxybenzyl)-s-trazine-2,4,6(1H,3H,5H)trione, and is also known as 1,3,5-tris(3,5-di-t-butyl-4-hydroxybenzyl) 130 cyanurate.

## Claims

1. A thermoplastic molding composition comprising:
(a) an aromatic polycarbonate resin present at a level of from 30 to 90 weight percent based on the total weight of the composition;
(b) an ABS graft copolymer present at a level of from 5 to 30 weight percent based on the total weight of the composition; and
(c) a gloss reducing amount of an olefin-carboxylic acid copolymer, said copolymer containing no metal ions.

2. The composition of claim 1, wherein said composition comprises said aromatic polycarbonate resin at a level of from 50 to 80 weight percent based on the total weight of the composition, and said ABS graft copolymer at a level of from 15 to 25 weight percent based on the total weight of the resin.

3. The composition of Claim 1 or Claim 2 wherein said aromatic polycarbonate resin is a bisphenol A polycarbonate resin.

4. The composition of any preceding claim wherein said ABS graft copolymer comprise from 15 to 90 weight percent diene rubber based on the total weight of the ABS graft copolymer.

5. The composition of any preceding claim wherein said olefin-carboxylic acid copolymer is formed from an α-olefin and α,β-ethylenically unsaturated carboxylic acid.

6. The composition of any preceding claim wherein said olefin-carboxylic acid copolymer is an ethylene-methacrylic acid copolymer.

7. The composition of any preceding claim wherein said olefin-carboxylic acid copolymer is present at a level of from 1 to 20 weight percent based on the total weight of the composition.

8. The composition of any preceding claim wherein said composition further comprises from 1 to 60 percent by weight styrene-acrylonitrile copolymer based on the total weight of the composition.
